# DEMANDE DE BREVET EUROPEEN

(11) **EP 4 606 283 A1**
(43) Date de publication de la demande: **27.08.2025**
(21) Numéro de dépôt: 25158730.9
(22) Date de dépôt: 19.02.2025
(51) Int. Cl.: A47J 37/12

(54) **APPAREIL DE CUISSON A BAIN D'HUILE DE TYPE FRITEUSE COMPORTANT UNE VANNE DE COMMANDE TROIS VOIES**

(30) Priorité: 20.02.2024 FR 2401661
(71) Demandeur: Roller Grill International, 28800 Bonneval (FR)
(72) Inventeur: AGEORGES, Pierre, 94100 Saint-Maur-des-Fosses (FR)
(74) Mandataire: Ipside

(57) **Abrégé**

L'invention concerne un appareil (1) de cuisson à bain d'huile comportant au moins un châssis (10), une cuve supérieure de cuisson (20) présentant un orifice de vidange, des moyens (30) de chauffage de l'huile, un bac inférieur (100) de récupération d'huile, des moyens de vidange pour évacuer l'huile de la cuve supérieure (20) vers le bac inférieur (100), et des moyens de pompage, caractérisé en ce qu'il comporte en outre une vanne trois voies (150) équipée d'un actionneur manuel (151) mobile entre une première position dans laquelle les moyens de chauffage (30) sont activés, une deuxième position intermédiaire dans laquelle les moyens de vidange sont ouverts, et une troisième position dans laquelle les moyens de pompage sont activés pour remplir la cuve supérieure (20) avec l'huile contenue dans le bac inférieur (100).

## Description

### Domaine technique de l'invention

La présente invention concerne un appareil de cuisson à bain d'huile de type friteuse.

### Technique antérieure

Dans le domaine de la restauration professionnelle, en particulier dans les cantines, les restaurants ou les foodtrucks, il est très courant d'utiliser des appareils de cuisson à bain d'huile de type friteuses.

Ces appareils, réalisés le plus souvent en acier inoxydable alimentaire, comportent typiquement un châssis, au moins une cuve supérieure de cuisson recevant l'huile à chauffer et dans laquelle les aliments à frire sont plongés à l'aide notamment d'un panier, des moyens de chauffage de l'huile à une température choisie, par exemple une température idéale de friture (typiquement environ 160° C à 190° C selon l'huile utilisée), des moyens de régulation de la température (thermostat), des moyens de vidange de la cuve supérieure de cuisson, un filtre à huile, un bac inférieur de récupération d'huile filtrée et des moyens de remplissage de la cuve supérieure avec l'huile filtrée issue du bac inférieur de récupération.

Or, le passage de l'opération de vidange de la cuve supérieure de cuisson vers le bac inférieur de récupération à l'opération de remplissage de ladite cuve supérieure de cuisson avec l'huile filtrée issue du bac inférieur de récupération est souvent complexe, peu pratique et nécessite plusieurs manipulations qui obligent qu'un utilisateur soit constamment sur place pour surveiller que tout se passe comme prévu. Il a déjà été tenté de résoudre ce problème en utilisant une minuterie pour l'une et/ou l'autre de ces opérations mais ce n'est pas idéal et des risques subsistent de laisser l'appareil sans surveillance.

De même, l'opération de cuisson peut présenter un danger si jamais l'huile est à un niveau trop faible dans la cuve supérieur, par exemple suite à une mauvaise manipulation des boutons de commande de chauffage (thermostat, durée d'une minuterie), soit dans l'hypothèse où la vidange a été enclenchée par mégarde, vidant de ce fait la cuve supérieur en phase de chauffage de l'huile.

### Présentation de l'invention

La présente invention vise à remédier à ces inconvénients avec une approche totalement novatrice, facilitant l'utilisation de l'appareil de cuisson et améliorant notablement la sécurité des utilisateurs en ce qui concerne le chauffage, la vidange et le remplissage.

A cet effet, selon un premier aspect, la présente invention se rapporte à un appareil de cuisson à bain d'huile de type friteuse comportant au moins :
- un châssis,
- une cuve supérieure de cuisson prévue pour contenir une quantité déterminée d'huile de friture et présentant un orifice de vidange,
- des moyens de chauffage de l'huile contenue dans la cuve supérieure de cuisson pour porter cette dernière à une température de cuisson choisie,
- un bac inférieur de récupération d'huile,
- des moyens de vidange pour évacuer l'huile de la cuve supérieure de cuisson vers le bac inférieur de récupération, et
- des moyens de pompage,
caractérisé en ce qu'il comporte en outre une unique vanne trois voies équipée d'un actionneur manuel mobile entre :
- une première position extrême dans laquelle ladite vanne active les moyens de chauffage de l'huile contenue dans la cuve supérieure de cuisson jusqu'à la température choisie,
- une deuxième position intermédiaire dans laquelle les moyens de vidange sont ouverts pour déverser l'huile contenue dans la cuve supérieure de cuisson vers le bac inférieur de récupération, et
- une troisième position extrême dans laquelle ladite vanne active les moyens de pompage pour remplir la cuve supérieure de cuisson avec l'huile contenue dans le bac inférieur de récupération.

De cette façon, d'une part les opérations de chauffage, de vidange et de remplissage sont parfaitement distinctes et ne peuvent pas être effectuées simultanément, et d'autre part la sélection parmi ces trois modes de fonctionnement est facilitée par l'utilisation d'une vanne trois voies. Les utilisateurs se sentent ainsi en confiance et en sécurité avec l'appareil car ils ne peuvent pas commettre de manipulation inappropriée.

L'invention est mise en œuvre selon les modes de réalisation et les variantes exposées ci-après, lesquelles sont à considérer individuellement ou selon toute combinaison techniquement opérante.

Avantageusement, la vanne trois voies est équipée d'au moins un premier contacteur électromécanique relié aux moyens de chauffage et un deuxième contacteur électromécanique relié aux moyens de pompage, et l'actionneur manuel est de type rotatif de sorte qu'il n'active que le premier contacteur électromécanique dans la première position extrême, et qu'il n'active que le second contacteur électromécanique dans la troisième position extrême et qu'il n'active aucun des contacteurs dans la deuxième position intermédiaire.

Ainsi, les utilisateur ne peuvent en aucun cas effectuer de mauvaises manipulations pouvant risquer d'abîmer l'appareil ou être contraires aux normes d'hygiène. De plus, la sélection des différents modes de fonctionnement ainsi que la mise en route des moyens associés (chauffage, vidange, pompage/remplissage) sont à la fois intuitives, simples et sécurisantes.

De préférence, l'appareil comporte en outre un capteur de seuil inférieur du niveau de l'huile contenue dans la cuve supérieure de cuisson, ledit capteur étant connecté aux moyens de chauffage pour désactiver ces derniers dans la première position extrême de l'actionneur manuel dès que ledit seuil inférieur est atteint.

Cette solution évite une surchauffe de l'huile et réduit considérablement les risques qui peuvent en découler, tels que l'émission de fumées nocives suite au dépassement de la température maximum d'utilisation de l'huile, le déclenchement d'un incendie potentiel ou la destruction de la cuve supérieure de cuisson.

Selon une caractéristique complémentaire, les moyens de détection de seuil comportent une canalisation verticale présentant une extrémité inférieure disposée proche et sensiblement au-dessus de l'ouverture de sorte que l'huile présente dans la cuve supérieure de cuisson peut pénétrer dans ladite canalisation et monter, par effet de vase communiquant, jusqu'à un niveau d'huile identique à celui de l'intérieur de ladite cuve, et un capteur de seuil inférieur de niveau d'huile de type capacitif disposé en regard de la canalisation à un niveau correspondant audit seuil.

Cette solution est simple à mettre en œuvre du point de vue de la conception de l'appareil, tout en étant très fiable et très pratique pour l'utilisateur qui n'a pas à regarder le fond de la cuve supérieure de cuisson pour vérifier le niveau d'huile, et qui peut même s'absenter tout en laissant les moyens de chauffage allumés car ceux-ci vont s'éteindre automatiquement si besoin grâce au capteur.

De manière avantageuse, le capteur est réglable en sensibilité depuis l'extérieur du châssis.

Ainsi, l'utilisateur peut choisir de modifier le seuil minimum du niveau d'huile restant au fond de la cuve supérieure de cuisson en dessous duquel les moyens de chauffage sont automatiquement stoppés. Cela permet par exemple de pouvoir modifier ce seuil en fonction du type d'huile utilisée car chaque huile présente une certaine densité/viscosité et surtout une température maximum de fonctionnement qu'il ne faut pas dépasser.

Selon un mode de réalisation préférée de la présente invention, l'appareil comporte également un capteur de seuil inférieur du niveau de l'huile contenue dans le bac inférieur de récupération, ledit capteur étant connecté aux moyens de pompage pour désactiver ces derniers dans la troisième position extrême de l'actionneur manuel dès que ledit seuil inférieur est atteint.

Cette solution permet d'éviter que les moyens de pompage aspirent dans le vide et créent des bulles d'air dans l'huile contenue dans la cuve supérieure de cuisson qui peuvent par exemple provoquer des éclaboussures. Cela contribue également à améliorer la maintenance de l'appareil car les moyens de pompage s'usent moins rapidement.

Selon un aspect complémentaire, le capteur de seuil inférieur de niveau d'huile dans le bac inférieur de récupération comporte un détecteur mesurant le poids dudit bac et de la quantité d'huile contenu, ledit détecteur étant taré à une valeur de poids en dessous de laquelle les moyens de pompage s'arrêtent automatiquement.

Cette solution est simple à mettre en œuvre, très fiable et elle ne nécessite pas de modification de la cuve ou d'interaction entre l'huile et un détecteur qui pourrait se salir ou s'abimer. La mesure est très rapide et l'utilisateur n'est pas obligé de rester près de l'appareil lors de la phase de remplissage de la cuve supérieur de cuisson avec l'huile du bac inférieur de récupération puisque les moyens de pompage se coupent automatiquement lorsque le seuil inférieur est atteint.

De manière plus spécifique, le détecteur de poids relie le bac inférieur de récupération d'huile au châssis à l'aide d'un système réglable de ressort(s) relié au châssis en différents points correspondants chacun à un tarage différent.

Ainsi, l'utilisateur peut modifier le tarage du système de pesée en fonction notamment du type de bac inférieur de récupération utilisé (i.e. sa forme et/ou matière, qui peuvent chacune influencer sur son poids à vide) et/ou du type d'huile utilisée (chaque huile présente une densité différente et donc un poids différent pour un même volume).

Avantageusement, les moyens de pompage comportent une pompe et un tuyau souple de succion plongeant au fond du bac inférieur de récupération d'huile.

Cette solution permet à l'utilisateur de manipuler facilement le tuyau de succion pour le placer rapidement au bon endroit au fond du bac inférieur de récupération afin que l'aspiration de l'huile soit optimisée.

De manière avantageuse, le tuyau de succion comporte une extrémité d'aspiration orientée vers le haut, à l'opposé du fond du bac inférieur de récupération d'huile.

Cette solution permet de laisser une petite quantité d'huile au fond du bac inférieur de récupération et empêche également au tuyau de succion d'aspirer le fond du bac et de se coller à ce dernier.

Selon une caractéristique complémentaire, l'extrémité d'aspiration du tuyau de succion est équipée d'une crépine amovible.

Ainsi, l'huile usagée qui retourne dans la cuve supérieure de cuisson est finement filtrée, évitant les agrégats de matière alimentaire calcinée qui pourraient créer des points chauds lors du chauffage de l'huile à haute température.

Selon un mode particulier de réalisation de la présente invention, le châssis comporte un crochet de support pour le tuyau de succion notamment lorsque le bac inférieur de récupération d'huile est sorti.

Cette solution permet de ranger facilement le tuyau de succion, notamment lorsqu'il est souhaitable de sortir le bac inférieur de récupération hors du châssis par exemple pour le nettoyer.

Selon un aspect particulièrement intéressant de la présente invention, les moyens de pompage sont reliés à l'orifice de vidange/remplissage situé au fond de la cuve supérieure cuisson de sorte que l'évacuation de l'huile vers le bac inférieur de récupération s'effectue par gravité au travers de la vanne trois voies dans la deuxième positon de cette dernière et le remplissage en huile du bac inférieur de récupération vers la cuve supérieure de cuisson s'effectuent par refoulement par ladite ouverture de fond à l'aide des moyens de pompage.

Cette solution réduit le nombre de canalisations de transport de l'huile d'une part et empêche les éventuelles éclaboussures d'huile qui peuvent survenir lors d'un remplissage de la cuve supérieur de cuisson par le haut, comme cela se pratique habituellement. Ainsi, le gain en sécurité et en hygiène est très important grâce à cette solution de « mutualisation » de l'ouverture de vidange de la cuve supérieure de cuisson et à l'utilisation de la vanne trois voies conforme à l'invention.

De préférence, le bac inférieur de récupération d'huile est supporté de manière amovible par un support coulissant le long de rails parallèles fixés au châssis, ledit support coulissant étant par ailleurs détachable desdits rails pour être retiré dudit châssis par l'avant et/ou l'arrière de celui-ci.

Cette solution permet de sortir le bac inférieur de récupération d'huile notamment pour le remplacer (s'il est abimé ou pour en installer un nouveau d'une autre contenance) et/ou pour le nettoyer.

Selon un aspect complémentaire, le support coulissant comporte un fond pourvu en partie arrière de protubérances/picots sur lesquelles repose le bac inférieur de récupération d'huile de sorte que ce dernier n'est pas horizontal mais surélevé à l'arrière pour être incliné vers l'avant de l'appareil.

Cette solution permet à l'extrémité d'aspiration du tuyau de succion d'être positionnée là où le niveau d'huile est le plus élevé (la partie avant du bac inférieur), afin de pouvoir pomper une quantité maximum d'huile pour remplir la cuve supérieure de cuisson, mais également d'éviter le phénomène de ventouse lié à l'accumulation d'huile entre le bac et son support.

De manière avantageuse, le support coulissant comporte au moins un pied escamotable, n particulier déployable automatiquement à la sortie dudit support hors du châssis et rétractable à l'entrée dudit support dans ledit châssis.

Cette solution permet, lorsque le bac inférieur de récupération d'huile est sorti vers l'avant hors du châssis, de garantir une meilleure stabilité à l'appareil en empêchant qu'il penche vers l'avant, ce qui pourrait provoquer de graves brûlures et/ou une pollution du sol par l'huile qui se déverserait.

Selon une caractéristique particulière de la présente invention, chaque pied comporte une première partie de soutien articulée autour d'un premier axe transversal, ladite première partie étant repliée vers l'avant le long de la paroi latéral du support coulissant lorsque ce dernier est dans une première position rentrée dans le châssis et dépliée vers le bas pour être posée sensiblement verticalement au sol lorsque ledit support coulissant est dans une seconde positon sortie hors du châssis, et une seconde partie articulée autour d'un second axe transversal, ladite seconde partie comportant un cliquet engagé dans un logement de la première partie de soutien pour bloquer cette dernière dans la seconde position du pied et dégagé dudit logement lors du passage du support coulissant de la seconde position vers la première position.

Cette solution permet au pied de se déployer automatiquement lors de la sortie du bac inférieur de récupération d'huile par coulissement dans une première direction, de rester stable une fois posé au sol, et de se rétracter également automatiquement lorsque le bac inférieur est rentré à l'intérieur du châssis par coulissement dans la direction inverse. L'utilisateur n'a ainsi aucune manipulation à effectuer pour sortir et rentrer le pied, ce qui engendre des gains notables en termes d'efficacité, de rapidité d'utilisation, de sécurité (stabilité de l'appareil garantie) et d'hygiène (aucune manipulation manuelle des pieds).

Avantageusement, l'appareil comporte deux pieds identiques espacés transversalement de part et d'autre du bac inférieur de récupération d'huile, lesdits pieds étant reliés l'un à l'autre par une barre transversale passant sous le support coulissant.

Cette solution permet une meilleure stabilité de l'appareil une fois le bac inférieur de récupération sorti hors du châssis et assure des mouvements synchronisés des pieds lors de leur escamotage et de leur déploiement.

De préférence, l'appareil comporte également un filtre amovible reposant sur le bac inférieur de récupération d'huile à l'aide de trois pattes munies chacune d'un crochet de sécurisation limitant le coulissement latéral et transversal dudit filtre.

Cette solution assure que le filtre est bien positionné et notamment qu'il ne va pas tomber au fond du bac inférieur de récupération d'huile, sans empêcher son retrait pour être lavé ou remplacé.

Selon une caractéristique particulière de la présente invention, le filtre comporte une structure de support reposant sur le bac inférieur de récupération d'huile et une structure de filtration formée par un maillage sensiblement conique prévu pour recevoir un cône amovible de filtration en tissu.

Ainsi, même si l'utilisateur ne positionne pas un cône amovible de filtration en tissu, la filtration reste efficace et permet de récupérer une huile contenant le moins possibles de débris divers (matière alimentaire calcinée) avant son pompage vers la cuve supérieure de cuisson.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 est une vue en perspective d'un appareil de cuisson à bain d'huile conforme à la présente invention,
[Fig. 2] la figure 2 est une vue de dessus de la figure 1,
[Fig. 3] la figure 3 est une vue de côté de la figure 1,
[Fig. 4] la figure 4 est une vue de face de la figure 1 montrant en particulier une vanne trois voies dans une première position extrême d'utilisation,
[Fig. 5] la figure 5 est une vue de détail zoomée de la figure 4,
[Fig. 6] la figure 6 est une vue similaire à la figure 4 mais dans laquelle la vanne trois voies est dans une deuxième position intermédiaire d'utilisation,
[Fig. 7] la figure 7 est une vue de détail zoomée de la figure 6,
[Fig. 8] la figure 8 est une vue similaire à la figure 7 mais dans laquelle la vanne trois voies est dans une troisième position extrême d'utilisation,
[Fig. 9] la figure 9 est une vue de dos de la figure 1,
[Fig. 10] la figure 10 est une vue de détail en perspective d'un bac inférieur de récupération d'huile et d'un tuyau de pompage,
[Fig. 11] la figure 11 est une vue en perspective similaire à la figure 1 mais dans laquelle certains éléments sont sortis,
[Fig. 12] la figure 12 est une vue de détail en perspective de la figure 11,
[Fig. 13] la figure 13 est une autre vue de détail en perspective de la figure 11 illustrant notamment des pieds de soutien,
[Fig. 14] la figure 14 est une vue en perspective similaire à la figure 1 mais dans laquelle la canalisation est accrochée à un crochet, et
[Fig. 15] la figure 15 est une vue en perspective d'une partie supérieure de l'appareil de cuisson illustrant notamment une cuve supérieure 20 de cuisson et un capteur de seuil inférieur de niveau d'huile.

### Description des modes de réalisation

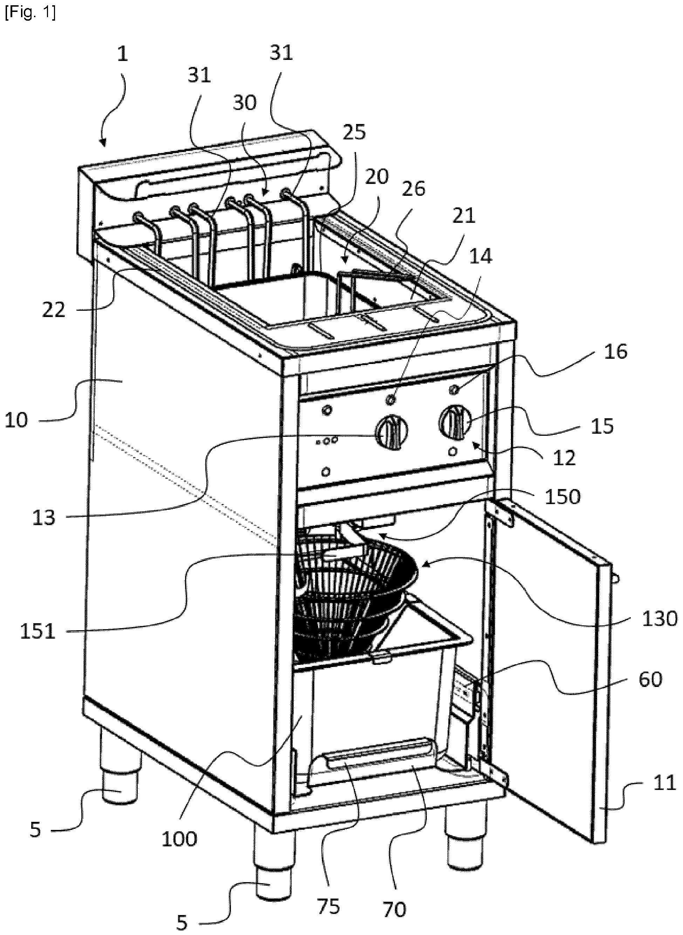

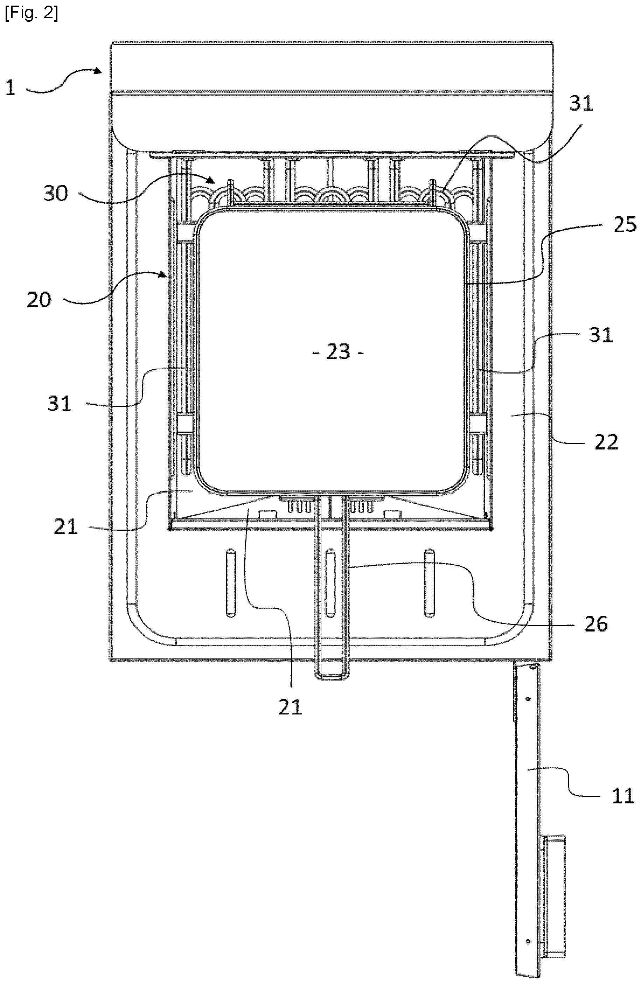

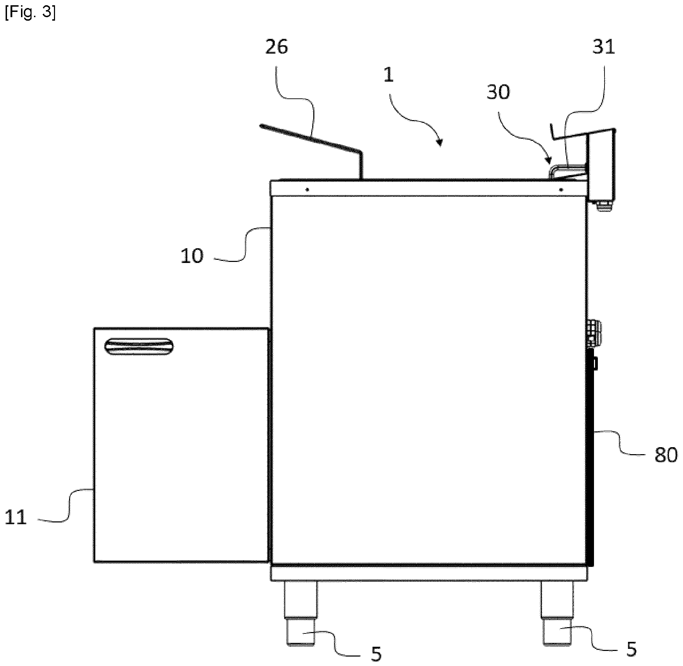

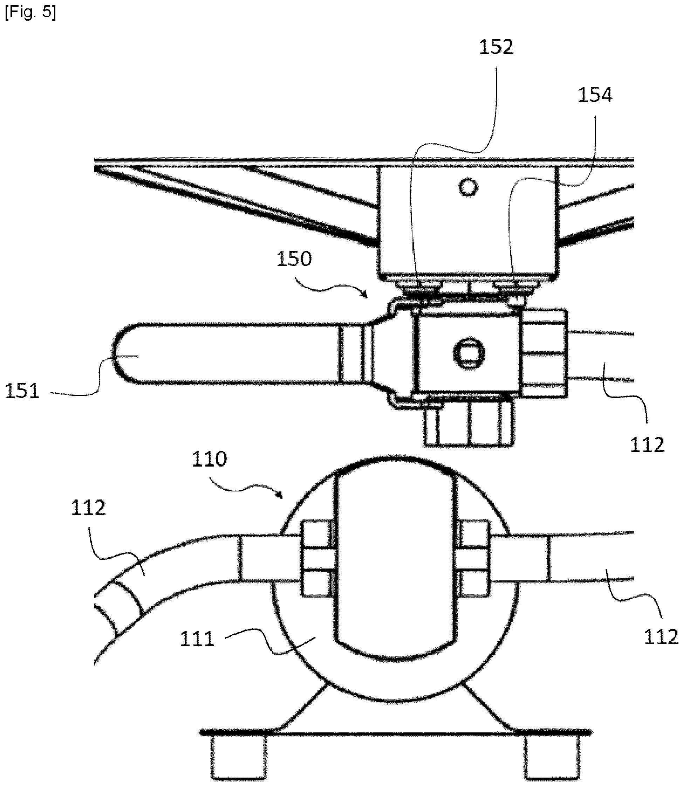

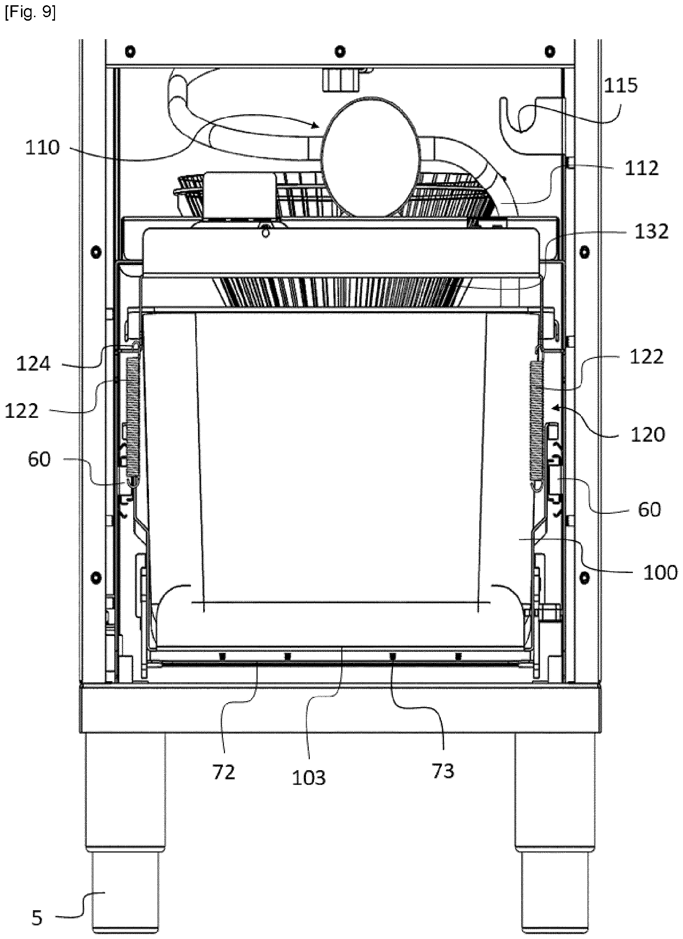

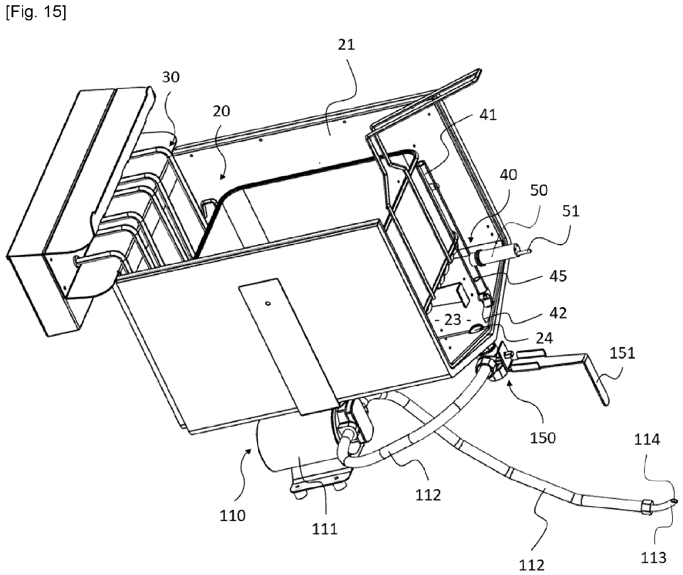

Les figures 1 à 15 représentent un appareil 1 de cuisson à bain d'huile, de type friteuse, utilisée notamment dans les restaurants, les cantines ou dans les foodtrucks. Les moyens techniques décrits ci-après peuvent toutefois être adaptés à une friteuse domestique à usage ménager.

La présente description est donnée à titre non limitatif, chaque caractéristique d'un mode de réalisation pouvant être combinée à toute autre caractéristique de tout autre mode de réalisation.

On note, dès à présent, que les figures ne sont pas nécessairement à l'échelle, sans que cela nuise à leur compréhension. Les termes avant et arrière font référence respectivement à la face avant et au dos de l'appareil 1.

La friteuse 1 comporte un châssis 10, de préférence majoritairement en acier inoxydable alimentaire (tôles soudées notamment), de forme sensiblement rectangulaire, plus haut que large dans le cas présent, reposant sur des pieds 5 et fermé en partie inférieure avant par une porte articulée 11 et par une trappe articulée arrière 80.

Un pupitre avant de commande 12 est présent sur la partie haute de l'appareil 1 et comporte typiquement un commutateur rotatif 13 de mise sous tension et de réglage de puissance, par exemple avec diverses graduations (chiffres) indiquant une intensité de chauffage, un voyant de mise sous tension 14 qui s'allume si l'appareil est mis en marche et si les moyens de chauffage fonctionnent, un bouton rotatif 15 de réglage de température (comportant des inscription de température s'étalant par exemple de 140° C à 200 ° C) et un voyant thermostatique 16 qui s'allume si la température souhaitée est atteinte (en général à environ 160° C pour un premier bain et à environ 180° C-190° C pour un second bain en ce qui concerne les frites de pommes de terre).

Le châssis 10 comporte une fosse / ouverture supérieure qui supporte une cuve supérieure 20 de cuisson destinée être remplie d'huile de friture. Cette cuve 20 réalisée en acier inoxydable alimentaire comporte des parois latérales 21 pourvues d'un rebord supérieur 22 de manière à former un parallélépipède de rectangle (une cuve à section différente, par exemple circulaire, est tout à fait envisageable) et d'un fond 23 pourvu d'une ouverture de vidange et de remplissage 24. Cette cuve est destinée à recevoir au moins un panier métallique de cuisson 25 sous forme de treillis de forme parallélépipédique muni d'une poignée de préhension 26.

Le châssis 10 supporte également des moyens amovibles de chauffage 30 comportant plusieurs résistances électriques 31 (par exemple du type en « U » ou à méandres) plongeant à l'intérieur de la cuve supérieure de cuisson 20 jusqu'à une certaine distance du fond 23 de cette dernière, par exemple entre environ 1 et 3 centimètres. Les résistances 31 ne sont donc pas en contact ni avec les parois latérales 21 ni avec le fond 23 de la cuve supérieure de cuisson 20.

Des moyens 40 de détection du seuil minimum Sc de niveau d'huile présent dans la cuve supérieure de cuisson 20 sont également prévus à côté de cette dernière. Il s'agit dans le cas présent d'une canalisation verticale 41 présentant une extrémité inférieure 42 disposée légèrement au-dessus de l'orifice 24 du fond 23 et qui remonte de manière verticale le long d'une paroi latérale 21 de cette dernière, de préférence la paroi avant, en direction du rebord supérieur 22. Ainsi, quand l'huile rempli la cuve supérieure de cuisson 20, une petite portion pénètre dans la canalisation 41 par effet de vases communicants de sorte que le niveau de l'huile dans la canalisation de dérivation 41 est en permanence le même que celui la cuve supérieure de cuisson 20. Un capteur 50, par exemple de type capacitif, est placé en regard d'un repère (fictif ou réel) représentant le seuil inférieur Sc du niveau d'huile dans la cuve supérieure de cuisson 20. Ainsi, le ménisque 45 formé par l'huile située dans la canalisation de dérivation 41 et qui se trouve en regard de ce capteur 50 permet de savoir si le niveau d'huile dans la cuve supérieure de cuisson 20 est en dessous ou au-dessus de ce seuil Sc. Ce capteur 51 est réglable en sensibilité, par exemple avec une petite molette 51 éventuellement accessible depuis l'extérieur du châssis 10 au niveau du pupitre de commande 12.

Le châssis 10 sert aussi de support en partie basse à deux rails horizontaux inférieurs 60 disposés parallèlement entre eux. Ces deux rails 60, par exemple en acier inoxydable alimentaire, supportent un support 70 mobile en translation par coulissement grâce à une poignée avant 75 vers l'avant ou l'arrière de l'appareil 1 quand la porte avant 11 ou la trappe arrière 80 est ouverte.

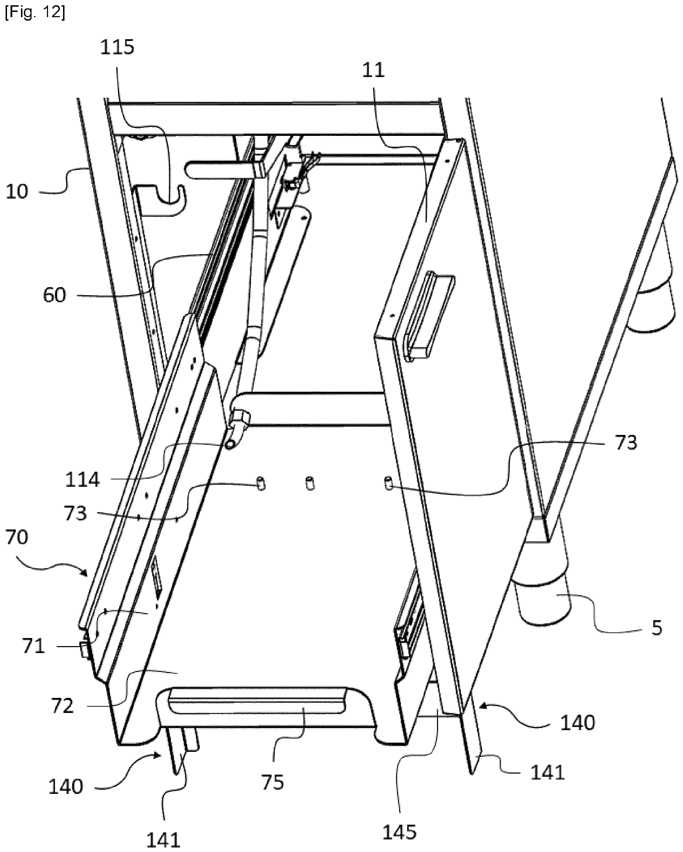

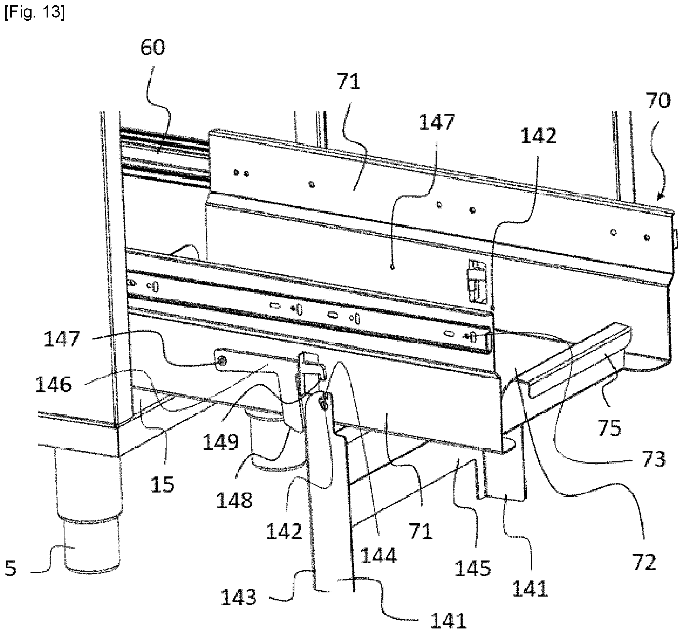

Comme cela est visible sur notamment sur les figures 12 et 13, le support coulissant 70 prend la forme d'un petit réceptacle de faible hauteur (typiquement quelques centimètres) tel qu'un tiroir en acier inoxydable alimentaire comportant des parois latérales 71 munies de glissières 73 correspondants aux rails 60, et un fond plat 72. Le fond 72 est quant à lui pourvu d'une série de protubérances arrière 73 dressées sensiblement verticalement et disposés par exemple le long d'une ligne (d'autres motifs sont envisageables, par exemple en quinconce ou en arc).

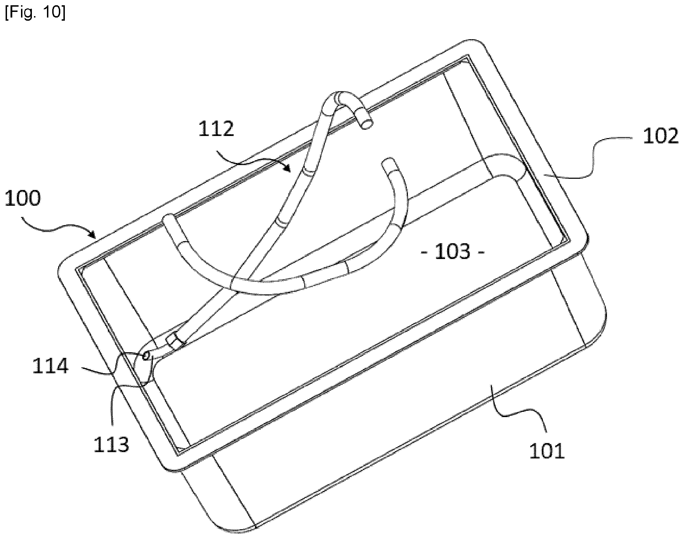

Le support 70 reçoit un bac inférieur 100 de récupération d'huile illustré plus en détail sur la figure 10 et réalisé en acier inoxydable. Ce bac 100 présente également une forme de parallélépipède rectangle pourvu de parois latérales 101, d'un bord supérieur 102 et d'un fond 103. Le fond 103 du bac inférieur de récupération 100 repose sur le fond 72 du support coulissant 70 de manière à être légèrement surélevé vers l'arrière / incliné vers l'avant grâce aux protubérances arrière 73. Plus précisément, l'arrière du fond 103 du bac 100 repose sur le sommet des protubérances 73 tandis que l'avant du fond 103 repose directement sur le fond 72 du support 70.

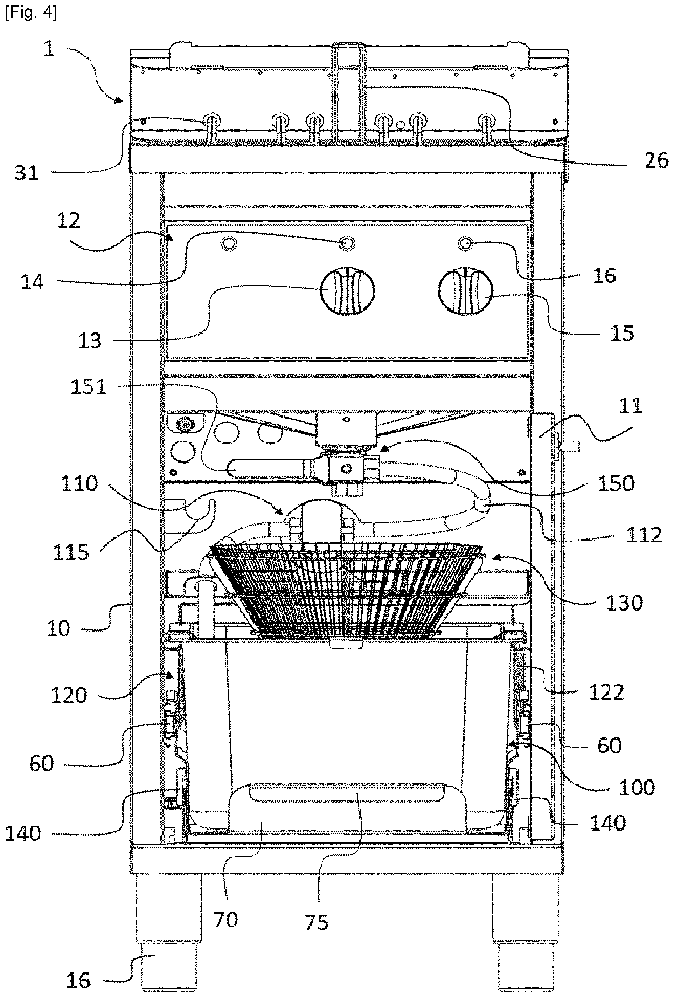

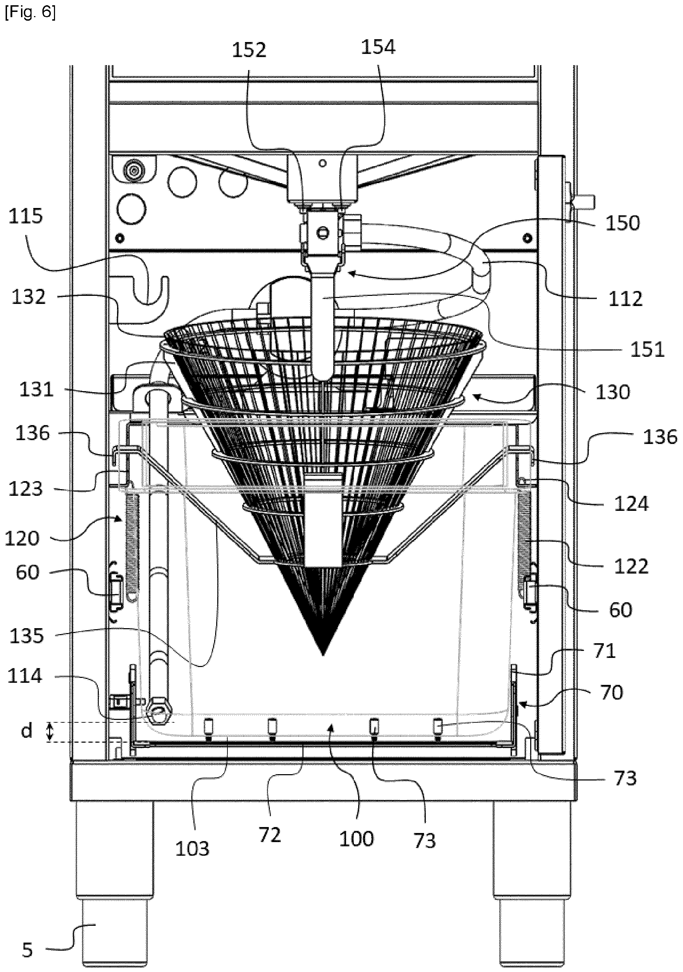

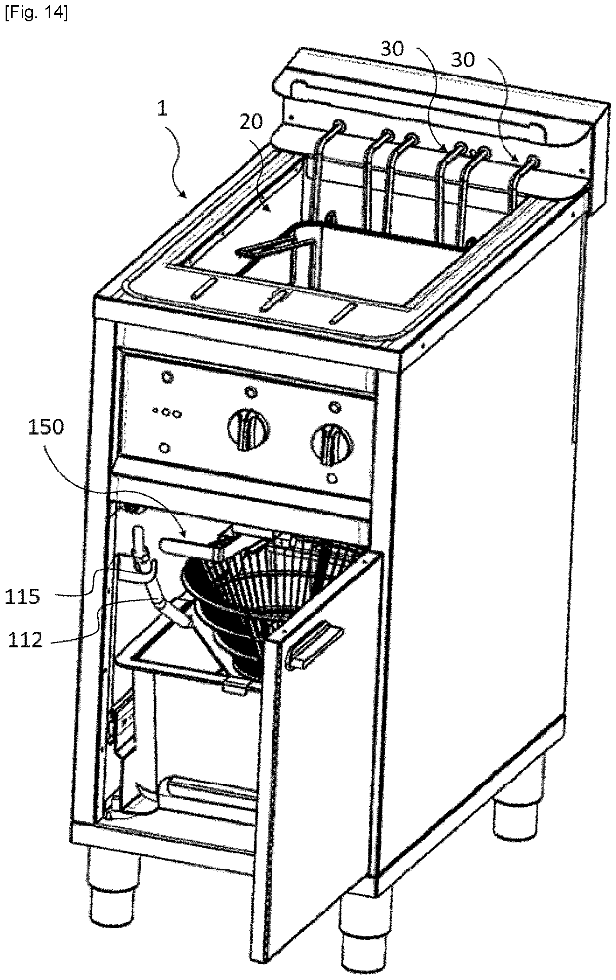

Comme cela est visible sur les figures 4 à 9, l'appareil de cuisson 1 comporte également des moyens 110 de pompage matérialisés par une pompe électrique 111 de type connue montée entre la cuve supérieur de cuisson 20 et le bac inférieur 100 de récupération d'huile 100. Cette pompe est équipée d'un tuyau de succion souple 112 (de type « tuyau de douche ») se terminant par une extrémité d'aspiration 113. Cette extrémité d'aspiration 113 présente une ouverture biseautée 114 de sorte que lorsque le tuyau de succion 112 repose au fond 103 du bac inférieur 100 de récupération d'huile, elle est dirigée verticalement vers le haut et sensiblement parallèlement audit fond 103 . Une distance d (voir figure 6) est ainsi définie entre point le plus bas de l'ouverture biseautée 114 (dans l'hypothèse où ladite ouverture de ne serait pas parfaitement horizontale) et le fond 103 du bac inférieur 100 de récupération d'huile. C'est cette distance d qui détermine un seuil inférieur Sb du niveau d'huile présente dans le bac inférieur 100 de récupération. Le tuyau de succion 112 peut être suspendu à un crochet latéral 115 lorsqu'il ne repose pas sur le fond 103 de la cuve inférieure de récupération 100, comme illustré par la figure 14, ce qui permet notamment de sortir le bac 100 hors du châssis 10 le long des rails 60.

Des moyens 120 de détection de ce seuil minimum Sc sont matérialisés par un capteur mesurant à tout moment au gramme près le poids de l'ensemble constitué par le bac inférieur 100 de récupération d'huile et la quantité d'huile qu'il contient. Il s'agit d'un capteur de pesée de type connu monté à l'arrière du bac inférieur 100 et relié à des ressorts latéraux de tarage 122 fixés de manière amovibles au châssis 10. Une série d'orifices superposés verticalement 123 permettent de modifier un des points d'accrochage de l'extrémité 124 de chaque ressort de 122 pour modifier le tarage du capteur de pesée en fonction notamment du poids à vide du bac inférieur 100 de récupération (selon la forme du bac, la nuance d'inox utilisée, l'épaisseur des tôles le constituant, etc.). Le capteur de pesée mesurant le poids du bac inférieur de récupération 100 et de l'huile qu'il contient, il est assez facile de tarer les ressorts 122 afin que les moyens de détection 120 déterminent avec précision le seuil Sb correspondant à la situation dans laquelle il reste une hauteur d d'huile (dite hauteur minimum) dans le fond 103 du bac inférieur 100 de récupération.

Par exemple en pratique, si la hauteur d est d'environ 1,5 cm, il est facile de déterminer le poids de l'huile occupant cette hauteur d sur la surface totale du fond 103 du bac inférieur de récupération 100, et donc le poids global dudit bac 100 et de cette quantité d'huile restante. Le capteur de pesée peut donc savoir en temps réel si le poids est inférieur ou supérieur à ce seuil Sb, et en informer une carte électronique (non illustrée) qui gère à la fois les moyens de chauffage 30 et les moyens de pompage 110.

Comme illustré par les figures 1, 4, 6, 11 et 12, un filtre 130 repose sur le rebord supérieur 102 du bac inférieur 100 de récupération. A cet effet, le filtre 130 comporte un support rigide en forme de cône inversé 131 composé de plusieurs anneaux (par exemple cinq) de diamètres croissants superposés et reliés parallèlement entre eux à l'aide de baguettes circonférentielles inclinées, par exemple au nombre de quatre réparties angulairement de manière régulière (tous les 90° ). Le support rigide 131 reçoit une structure conique 132 de filtration amovible de type treillis fin en métal et comporte également, au niveau d'un anneau inférieur (celui de plus faible diamètre), trois pieds 135 (un pied avant et deux pieds latéraux disposés de part et d'autre du pied avant à 90° de ce dernier) munis respectivement de crochets supérieurs 136 reposant sur le rebord 102 du bac inférieur 100 de récupération d'huile pour réduire les mouvements de translation latéraux (droite gauche) et longitudinaux (de l'avant vers l'arrière et inversement) afin d'assurer sa stabilité (l'huile qui s'évacue de la cuve supérieure de cuisson étant très chaude). Ce filtre 130 est ainsi amovible, de même que son treillis métallique 132 de filtration, lequel est par ailleurs adapté pour recevoir un cône optionnel en matière tissé (non représenté), de type filtre à café, qui permet d'améliorer la filtration de l'huile en bloquant des particules plus fines que celles bloquées par le treillis métallique 132.

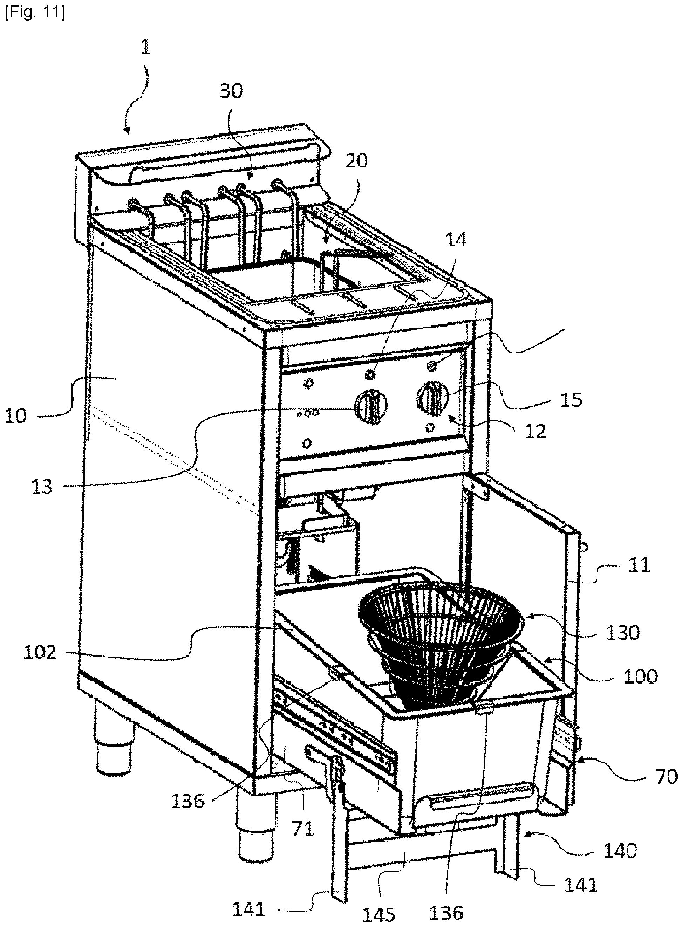

Le support coulissant 70 est également pourvu de deux pieds latéraux 140 escamotable (rétractable)/déployable. Plus précisément, comme illustré par les figures 11 à 13, chaque pied 140 comporte une première partie de soutien 141 sensiblement rectiligne articulée autour d'un premier axe transversal 142 et une seconde partie 146 en forme de « T » articulée autour d'un second axe transversal 147, ces deux axes étant solidaires de l'extérieur de la paroi latérale 71 du support coulissant 70. Les deux premières parties 141 des pieds 140 sont solidaires l'une de l'autre à l'aide d'une barre transversale 145 passant sous le support coulissant 70 de sorte que lesdits pieds s'articulent ensemble.

Chaque première partie 141 est repliée vers l'avant le long de la paroi latéral 71 du support coulissant 70 lorsque ce dernier est dans une première position rentrée dans le châssis 10 (figures 1 et 14 par exemple). Ces mêmes premières parties 141 sont par contre dépliée vers le bas pour être posées sensiblement verticalement au sol lorsque ledit support coulissant 70 est dans une seconde positon sortie hors du châssis, comme cela va être décrit ci-après en relation avec les figures 11à 13.

Chaque seconde partie 146 de pied comporte à cet effet une rampe inférieure 148 inclinée et un cliquet 149 pouvant s'engager dans un logement supérieur 144 de la première partie 141 correspondante.

Plus précisément, lorsque les pieds 140 passent de la position rentrée du support coulissant 70 à l'intérieur du châssis 10 (figure 1 par exemple) à la seconde position de sortie (figures 11 à 13), les deux premières parties 141 se déploient naturellement ensemble en pivotant autour de leurs axes respectifs 142 pour descendre progressivement vers le bas, à mesure que le support coulissant 70 sort du châssis 10, afin que lesdits pieds 140 reposent au sol. Simultanément, les deux secondes parties 146 pivotent ensemble autour de leurs axes respectifs 147 de sorte que les cliquets 149 pénètrent dans les logements supérieurs 144 pour sécuriser les pieds 140 dans leur position déployée. Ainsi, le bac inférieur 100 de récupération d'huile est stable et l'appareil 1 ne risque pas de pencher en avant et tomber sur l'utilisateur lorsque ce dernier souhaite par exemple retirer le filtre 130.

Lorsque l'utilisateur repousse le support coulissant 70 en direction de l'intérieur du châssis 10 à l'aide par exemple de la poignée 75, la rampe inférieure inclinée 148 de chacune des secondes parties 146 vient frotter contre le fond 15 du châssis 10, ce qui a pour effet de faire pivoter lesdites secondes parties 146 autours de leurs axes respectifs 147 dans le sens contraire de sorte que les cliquets 149 se relèvent et sortent des logements correspondants 144. En continuant à pousser le support 70 vers l'intérieur du châssis 10, l'arrière 143 des premières parties 141 de pied, qui ne sont donc plus bloquées par les cliquets 149, vient frotter contre un bord inférieur avant du fond 15 du châssis 10, ce qui provoque leur pivotement autour de leurs axes respectifs 142 dans le sens inverse jusqu'à ce que ces première parties 141 viennent se positionner le long des paroi latérales 71 dudit support 70. Une fois le support coulissant 70 entièrement entré à l'intérieur du châssis 10, la porte 11 articulée peut alors être refermée.

Enfin, l'appareil comporte une vanne 150 de type trois voies située par exemple sous la cuve supérieure de cuisson 20 et au-dessus du bac inférieur de récupération 100, proche de la pompe 111.

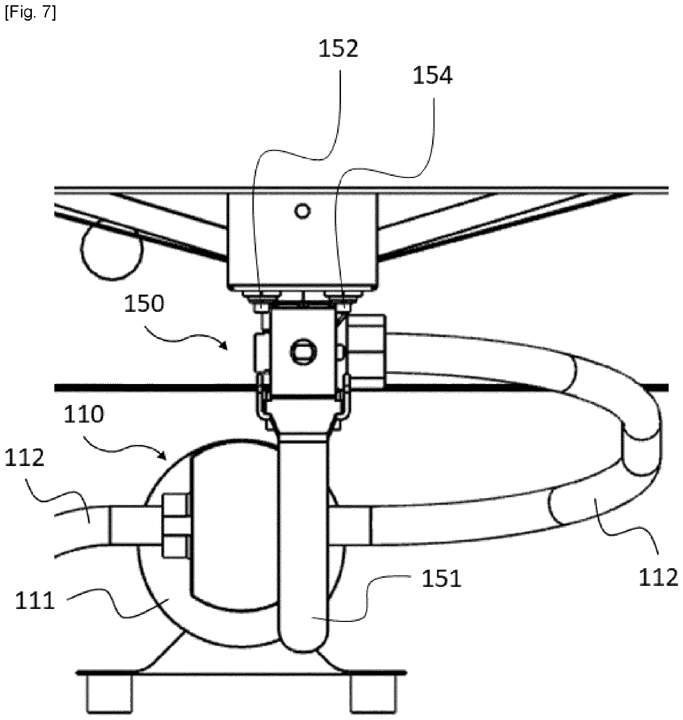

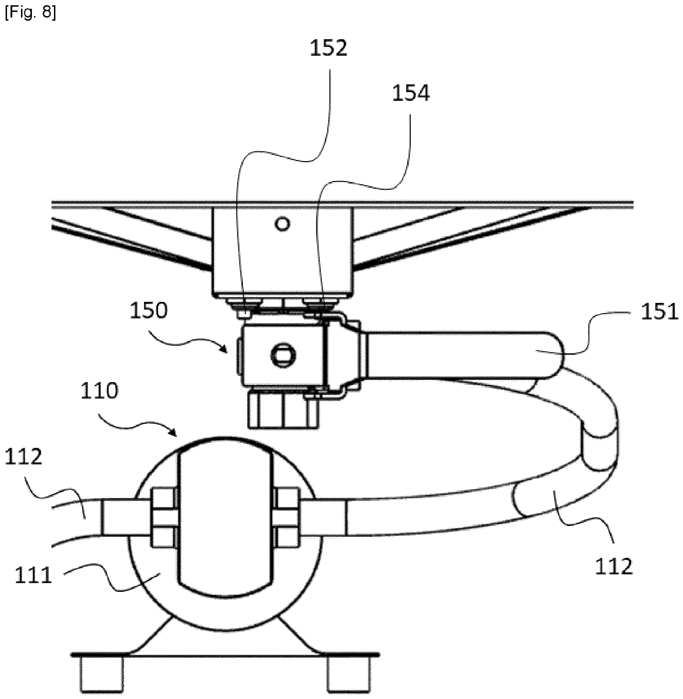

Cette vanne 150 pivote autour d'un axe grâce à une poignée de préhension 151 et peut occuper une première position extrême (figures 1, 4 et 5) dans laquelle elle active les moyens de chauffage 30 de l'huile contenue dans la cuve supérieure de cuisson 20 jusqu'à une température choisie grâce au bouton rotatif 15 du pupitre de commande, une deuxième position intermédiaire (figures 6 et 7) dans laquelle l'ouverture de vidange 24 est ouverte pour déverser l'huile contenue dans la cuve supérieure de cuisson 20 vers le bac inférieur 100 de récupération, et une troisième position extrême (figure 8) dans laquelle elle active les moyens de pompage 110 pour remplir la cuve supérieure de cuisson 20 avec l'huile contenue dans le bac inférieur 100 de récupération.

A cet effet, la vanne 150 comporte un premier contacteur 152 qui est activé dans la première position extrême, ledit contacteur 152 étant dans le cas présent de type électromécanique et étant relié à la carte électronique de pilotage des moyens de chauffage 30. La vanne 150 comporte également un second contacteur 154 similaire relié à la carte électronique de pilotage des moyens de pompage 110.

Ainsi, dans la première position, il est impossible que les moyens de pompage 110 soient activés et/ou que la vidange de la cuve supérieure de cuisson 20 se produise car seul le premier contacteur 152 est enclenché par la poignée 151 de la vanne 150.

Par ailleurs, dans la deuxième position, il est impossible que les moyens de chauffage 110 et/ou les moyens de pompage 30 soient activés car aucun des deux contacteurs 152 et 154 ne peut enclenché par la poignée 151 de la vanne 150. L'huile s'écoule donc par gravité de la cuve supérieure 20 vers le bac inférieur 100 de récupération en traversant le filtre 130 pour y être purifiée (élimination des résidus de cuisson).

Enfin, dans la troisième position, il est impossible que les moyens de chauffage 30 soient activés et/ou que la vidange se produise car seul le second contacteur 154 est enclenché par la poignée 151 de la vanne 150.

Ce fonctionnement type « tout ou rien » est donc extrêmement simple et sécurisé.

Une fois l'appareil 1 placé à l'endroit choisi dans une cuisine ou un foodtruck, bien stabilisé sur ses pieds 5 et branché au secteur, l'utilisateur rempli une première fois la cuve supérieure de cuisson 20 avec de l'huile neuve, jusqu'à un niveau maximum matérialisé par un repère visible, par exemple un trait en surépaisseur sur l'intérieur d'une des paroi latérales 21. Au préalable, l'utilisateur place la vanne trois voies 150 dans la première position extrême de sorte que les moyens de pompage 110 ne puissent pas être déclenchés et l'ouverture de vidange 24 soit obturée à la manière d'un robinet.

L'utilisateur met alors en route l'appareil 1 à l'aide du commutateur 13 et choisi son mode de fonctionnement et la température souhaitée. Le voyant 14 s'allume alors en vert pour indiquer que l'appareil 1 est bien sous tension et s'apprête à chauffer. Si le détecteur 40 de seuil inférieur de niveau d'huile Sc détecte qu'il n'y a pas assez d'huile dans la cuve supérieure de cuisson 20, alors les moyens de chauffage 110 ne peuvent pas activés.

Dès lors que le détecteur 40 indique à la carte électronique que tous les paramètres de niveau d'huile sont remplis, les moyens de chauffage 110 peuvent être déclenchés.

Si l'utilisateur n'a pas choisi au préalable une température de chauffage, il peut alors le faire à ce moment en tournant le bouton rotatif 15. L'huile se met alors à chauffer jusqu'à la température choisie (par exemple 160° C) et le voyant thermostatique 16 devient vert pour indiquer que cette température est atteinte. L'utilisateur peut alors plonger un panier rempli d'aliments à frire dans l'huile à bonne température, et procéder à la friture.

Lorsque l'utilisateur a terminé d'utiliser l'appareil 1, que ce dernier est éteint (vérification faire sur le voyant 14 qui n'est plus vert), il pivote alors la vanne trois voies 150 dans la deuxième positon afin que l'huile de friture se déverse automatiquement par gravité dans le bac inférieur 100 de récupération par l'ouverture 24 après avoir traversé le filtre 130, comme indiqué précédemment.

Une fois toute l'huile évacuée de la cuve supérieure de cuisson 20, l'utilisateur peut laisser la vanne trois voies 150 dans cette deuxième position s'il ne souhaite pas réutiliser l'appareil 1 prochainement.

Il peut en profiter pour retirer les résistances électriques 31 afin de les nettoyer, et faire de même pour la cuve supérieure de cuisson 20. Il peut également retirer le filtre 130 et le nettoyer ou jeter le cône de filtration en papier s'il y en avait un d'installé dans le treillis métallique 132.

L'huile présente dans le bac inférieur 100 de récupération est filtrée et peut alors être réutilisée si besoin pour un nouveau cycle de chauffage. On notera que si l'utilisateur déclenche volontairement ou par mégarde le commutateur 13 ou le bouton 15 pour mettre en route les moyens de chauffage alors que la vanne trois voies 150 est dans la deuxième position, les moyens de chauffage 30 ne pourront pas se mettre en route car le premier commutateur électromécanique 152 n'est pas activé. De la même manière, comme expliqué précédemment, si l'utilisateur pivote la vanne trois voies 150 dans le première position extrême, les moyens de chauffage 30, qui pourraient logiquement être activés dans cette position car le contacteur 152 est activé, ne fonctionneront pas car le détecteur 40 de seuil inférieur Sc de niveau d'huile dans la cuve supérieure de cuisson 20 indique à la carte électronique qu'il n'y a pas assez d'huile dans ladite cuve 20. La sécurité de l'utilisateur est donc totalement garantie.

Lorsque l'utilisateur souhaite de nouveau effectuer une friture, il pivote la vanne trois voies 150 dans la troisième position, ce qui a pour effet d'activer le contacteur 154 et de déclencher les moyens de pompage 110, sous réserve que le tuyau de succion 112 soit bien plongé dans l'huile en reposant sur le fond 103 du bac inférieur 100 de récupération et que le détecteur 120 de seuil inférieur Sb de niveau d'huile dans le bac inférieur de récupération 100 informe la carte électronique que ce niveau n'est pas en dessous dudit seuil Sb. Si tous les paramètres sont remplis, les moyens de pompage 110 aspirent alors l'huile filtrée par l'extrémité 113 d'aspiration du tuyau de succion 112 et la transporte du fond 103 dudit bac inférieur 100 de récupération vers la cuve supérieure de cuisson 20 en traversant la vanne trois voies 150 pour arriver à l'ouverture 24. Ainsi, le cuve supérieure de cuisson 20 se remplit par son fond 24 et non par le haut comme il est usuel de le pratiquer, ce qui évite considérablement les éclaboussures et les risques de brûlures. Tant que le détecteur 120 de seuil inférieur Sb de niveau d'huile ne se déclenche pas, c'est-à-dire tant que le niveau d'huile dans le bac inférieur 100 de récupération est encore supérieur audit seuil Sb, les moyens de pompage 110 aspirent l'huile. Les moyens de pompage 110 s'arrêtent automatiquement dès lors que le seuil inférieur Sb est atteint et qu'il ne reste plus suffisamment d'huile au fond 103 du bac inférieur 100 de récupération. Ainsi, l'utilisateur peut envoyer une séquence de pompage et vaquer à d'autres occupations sans avoir peur que la pompe tourne 111 à vide puisque cette dernière va s'arrêter toute seule.

L'utilisateur peut alors recommencer à utiliser l'appareil de cuisson 1 et effectuer une nouvelle friture, puis de nouveau effectuer une phase de filtration de l'huile comme décrit précédemment, et ainsi de suite tant que l'huile reste apte à la cuisson et respecte les normes alimentaires d'utilisation (nombre de cycles d'utilisation/filtration).

Lorsque l'utilisateur souhaite nettoyer le bac inférieur 100 de récupération, il ouvre la porte avant articulée 11, tire le support coulissant 70 mobile en le faisant coulisser le long des rails latéraux 60, il retire le filtre 130 et il sort le bac inférieur 100 de récupération. Durant cette opération les deux pieds latéraux escamotables 140 se sont déployés automatiquement en même temps que le support coulissant 70 est extrait hors du châssis 10 puis ils viennent prendre appui sur le sol en étant sécurisés par le crochet 146 de la seconde partie 146 de pied qui pénètre dans le logement 144 de la première partie 141 de pied, et ce pour chacun des deux pieds 140. Une fois nettoyé, l'utilisateur peut repositionner le bac inférieur 100 de récupération dans son support 70, en veillant à ce qu'il soit bien incliné vers l'avant, puis repousser ledit support 70 en le faisant coulisser vers l'arrière pour qu'il réintègre le châssis 100. Lors de cette opération, la rampe inférieure inclinée 148 de chaque seconde partie 142 de pied glisse sur le fond 15 du châssis, ce qui désengage chaque crochet 149 de son logement 144, permettant alors à la première partie 141 de chaque pied 141 de pivoter à son tour vers l'avant autour de son axe 142 en prenant également appui sur le rebord inférieur avant du fond 15 du châssis 10 à mesure que le support coulissant 70 est repoussé vers l'intérieur du châssis 10. La première partie 141 de chaque pied 140 vient au final se loger le long des bords 71 du support coulissant 70, parallèlement aux rails latéraux 60 et aux glissières 73. La baguette inférieure transversale 145 reliant les deux premières parties 141 des pieds 140 sous le support coulissant 70 permet quant à elle un mouvement simultané de rotation desdits pieds 140, dans un sens (déploiement) comme dans l'autre (rétractation).

Il doit être bien entendu que la description détaillée de l'objet de l'Invention, donnée uniquement à titre d'illustration, ne constitue en aucune manière une limitation, les équivalents techniques étant également compris dans le champ de la présente invention.

Ainsi, l'appareil peut comporter plusieurs cuves supérieures de cuisson (utilisables indépendamment ou simultanément), plusieurs organes de commande (commutateurs, boutons rotatifs, voyants de signalisation) et donc plusieurs moyens de chauffage, plusieurs moyens de pompage, plusieurs bacs inférieurs de récupération et plusieurs vannes trois voies. Une solution mutualisant les moyens de chauffage, les moyens de pompage (une seule pompe mais deux tuyaux de succion) pourrait cependant être envisagée.

## Revendications

1. Appareil (1) de cuisson à bain d'huile de type friteuse
comportant au moins :
- un châssis (10),
- une cuve supérieure de cuisson (20) prévue pour contenir une quantité déterminée d'huile de friture et présentant un orifice de vidange (24),
- des moyens (30) de chauffage de l'huile contenue dans la cuve supérieure de cuisson (20) pour porter cette dernière à une température de cuisson choisie,
- un bac inférieur (100) de récupération d'huile,
- des moyens de vidange (24 ; 150) pour évacuer l'huile de la cuve supérieure de cuisson (20) vers le bac inférieur (100) de récupération, et
- des moyens (110) de pompage,
**caractérisé en ce qu'**il comporte en outre une unique vanne trois voies (150) équipée d'un actionneur manuel (151) mobile entre :
- une première position extrême dans laquelle ladite vanne (150) active les moyens de chauffage (30) de l'huile contenue dans la cuve supérieure de cuisson (20) jusqu'à la température choisie,
- une deuxième position intermédiaire dans laquelle les moyens de vidange (24) sont ouverts pour déverser l'huile contenue dans la cuve supérieure de cuisson (20) vers le bac inférieur (100) de récupération, et
- une troisième position extrême dans laquelle ladite vanne (150) active les moyens de pompage (110) pour remplir la cuve supérieure de cuisson (20) avec l'huile contenue dans le bac inférieur (100) de récupération.

2. Appareil de cuisson (1) selon la revendication 1, **caractérisé en ce que** :
- la vanne trois voies (150) est équipée d'au moins un premier contacteur électromécanique (152) relié aux moyens de chauffage (30) et un deuxième contacteur électromécanique (154) relié aux moyens de pompage (110), et
- l'actionneur manuel (151) est de type rotatif de sorte qu'il n'active que le premier contacteur électromécanique (152) dans la première position extrême, qu'il n'active que le second contacteur électromécanique (154) dans la troisième position extrême et qu'il n'active aucun des contacteurs (152, 154) dans la deuxième position intermédiaire.

3. Appareil de cuisson (1) selon l'une quelconque des revendications précédentes, **caractérisé en ce qu'**il comporte en outre des moyens (40) de détection de seuil inférieur (Sc) du niveau de l'huile contenue dans la cuve supérieure de cuisson (20), ledit capteur (40) étant connecté aux moyens de chauffage (30) pour désactiver ces derniers dans la première position extrême de l'actionneur manuel (151) dès que ledit seuil inférieur (Sc) est atteint.

4. Appareil de cuisson (1) selon la revendication 3, **caractérisé en ce que** les moyens (40) de détection de seuil (Sc) comportent :
- une canalisation verticale (41) présentant une extrémité inférieure (42) disposée proche et sensiblement au-dessus de l'orifice de vidange (24) de sorte que l'huile présente dans la cuve supérieure de cuisson (20) peut pénétrer dans ladite canalisation (41) et monter, par effet de vase communiquant, jusqu'à un niveau d'huile identique à celui de l'intérieur de ladite cuve (20), et
- un capteur (50) de seuil inférieur (Sc) de niveau d'huile de type capacitif disposé en regard de la canalisation (41) à un niveau correspondant audit seuil (Sc).

5. Appareil de cuisson (1) selon la revendication 4, **caractérisé en ce que** le capteur 50) est réglable en sensibilité, de préférence depuis l'extérieur du châssis (10).

6. Appareil de cuisson (1) selon l'une quelconque des revendications précédentes, **caractérisé en ce qu'**il comporte également un capteur (120) de seuil inférieur (Sb) du niveau de l'huile contenue dans le bac inférieur (100) de récupération, ledit capteur (120) étant connecté aux moyens de pompage (110) pour désactiver ces derniers dans la troisième position extrême de l'actionneur manuel (151) dès que ledit seuil inférieur (Sb) est atteint.

7. Appareil de cuisson (1) selon la revendication 6, **caractérisé en ce que** le capteur (120) de seuil inférieur (Sb) de niveau d'huile dans le bac inférieur (100) de récupération comporte un détecteur mesurant le poids dudit bac (100) et de la quantité d'huile contenu, ledit détecteur étant taré à une valeur de poids en dessous de laquelle les moyens de pompage (110) s'arrêtent automatiquement.

8. Appareil de cuisson (1) selon la revendication 7, **caractérisé en ce que** le détecteur de poids relie le bac inférieur de récupération d'huile au châssis à l'aide d'un système réglable de ressort(s) (122) relié au châssis (10) en différents points (13) correspondants chacun à un tarage différent.

9. Appareil de cuisson (1) selon l'une quelconque des revendications précédentes, **caractérisé en ce que** les moyens de pompage (110) comportent une pompe (111) et un tuyau souple de succion (112) plongeant au fond du bac inférieur (100) de récupération d'huile.

10. Appareil de cuisson (1) selon la revendication 9, **caractérisé en ce que** le tuyau de succion (112) comporte une extrémité d'aspiration (113) orientée vers le haut, à l'opposé du fond du bac inférieur (100) de récupération d'huile.

11. Appareil de cuisson (1) selon la revendication 10, **caractérisé en ce que** l'extrémité d'aspiration (112) du tuyau de succion est équipée d'une crépine amovible.

12. Appareil de cuisson (1) selon l'une quelconque des revendications 9 à 11, **caractérisé en ce que** le châssis (10) comporte un crochet (115) de support pour le tuyau de succion (112) notamment lorsque le bac inférieur (100) de récupération d'huile est sorti.

13. Appareil de cuisson (1) selon l'une quelconque des revendications précédentes, **caractérisé en ce que** les moyens de pompage (110) sont reliés à l'orifice de vidange/remplissage (24) situé au fond de la cuve supérieure cuisson (20) de sorte que l'évacuation de l'huile vers le bac inférieur (100) de récupération s'effectue par gravité au travers de la vanne trois voies (150) dans la deuxième positon de cette dernière et le remplissage en huile du bac inférieur (100) de récupération vers la cuve supérieure de cuisson (20) s'effectuent par refoulement par ledit orifice de vidange (24) à l'aide des moyens de pompage (110).

14. Appareil de cuisson (1) selon l'une quelconque des revendications précédentes, **caractérisé en ce que** le bac inférieur (100) de récupération d'huile est supporté de manière amovible par un support coulissant (70) le long de rails parallèles (60) fixés au châssis (10), ledit support coulissant (70) étant par ailleurs détachable desdits rails (60) pour être retiré dudit châssis (10) par l'avant et/ou l'arrière de celui-ci.

15. Appareil de cuisson (1) selon la revendication 14, **caractérisé en ce que** le support coulissant (70) comporte un fond (72) pourvu en partie arrière de protubérances/picots (73) sur lesquelles repose le bac inférieur (100) de récupération d'huile de sorte que ce dernier n'est pas horizontal mais surélevé à l'arrière pour être incliné vers l'avant de l'appareil (1).

16. Appareil de cuisson (1) selon l'une quelconque des revendications 14 à 15, **caractérisé en ce que** le support coulissant (70) comporte au moins un pied (140) escamotable, en particulier déployable automatiquement à la sortie dudit support (70) hors du châssis (10) et rétractable à l'entrée dudit support (70) dans ledit châssis (10).

17. Appareil de cuisson (1) selon la revendication 16, **caractérisé en ce que** chaque pied (140) comporte :
- une première partie de soutien (141) articulée autour d'un premier axe transversal (142), ladite première partie (141) étant repliée vers l'avant le long d'une paroi latérale (71) du support coulissant (70) lorsque ce dernier est dans une première position rentrée dans le châssis (10) et dépliée vers le bas pour être posée sensiblement verticalement au sol lorsque ledit support coulissant (70) est dans une seconde positon sortie hors du châssis (10), et
- une seconde partie (146) articulée autour d'un second axe transversal (147), ladite seconde partie (146) comportant un cliquet (149) engagé dans un logement (144) de la première partie de soutien (141) pour bloquer cette dernière dans la seconde position du pied (140) et dégagé dudit logement (144) lors du passage du support coulissant (70) de la seconde position vers la première position.

18. Appareil de cuisson (1) selon l'une quelconque des revendications 16 à 17, **caractérisé en ce qu'**il comporte deux pieds (140) identiques espacés transversalement de part et d'autre du bac inférieur (100) de récupération d'huile, lesdits pieds (140) étant reliés l'un à l'autre par une barre transversale (145) passant sous le support coulissant (70).

19. Appareil de cuisson (1) selon l'une quelconque des revendications précédentes, **caractérisé en ce qu'**il comporte également un filtre amovible (130) reposant sur le bac inférieur (100) de récupération d'huile à l'aide de trois pattes (136) munies chacune d'un crochet (136) de sécurisation limitant le coulissement latéral et transversal dudit filtre (130).

20. Appareil de cuisson (1) selon la revendication 19, **caractérisé en ce que** le filtre (130) comporte une structure de support (31) reposant sur le bac inférieur (100) de récupération d'huile et une structure de filtration (132) formée par un maillage sensiblement conique prévu pour recevoir un cône amovible de filtration en tissu.
